# EUROPÄISCHE PATENTSCHRIFT

(11) **EP 2 710 873 B1**
(45) Veröffentlichungstag und Bekanntmachung des Hinweises auf die Patenterteilung: **28.02.2018**
(21) Anmeldenummer: 13172930.3
(22) Anmeldetag: 20.06.2013
(51) Int. Cl.: A01B 79/00, A01B 69/00

(54) **Steuerungsvorrichtung für eine landwirtschaftliche Arbeitsmaschine**
Control assembly for an agricultural work machine
Dispositif de commande pour une machine de travail agricole

(30) Priorität: 21.09.2012 DE 102012018626
(43) Veröffentlichungstag der Anmeldung: 26.03.2014
(73) Patentinhaber: CLAAS E-Systems KGaA mbH & Co KG, 49201 Dissen a.T.W. (DE)
(72) Erfinder: Meyer zu Helligen, Lars, 32139 Spenge (DE)
(74) Vertreter: Budach, Steffen

(56) Entgegenhaltungen:
- US-A1- 2008 147 282
- US-A1- 2008 228 360
- US-A1- 2010 023 229
- US-B1- 6 686 951

## Beschreibung

Die Erfindung betrifft eine Steuerungsvorrichtung für eine landwirtschaftliche Arbeitsmaschine mit den Merkmalen des Oberbegriffs von Anspruch 1 und eine landwirtschaftliche Arbeitsmaschine mit einer Steuerungsvorrichtung gemäß Anspruch 12. In der Landwirtschaft ist es bekannt, verschiedene Abläufe automatisiert ablaufen zu lassen. Das betrifft einerseits die Lenkung und die Bewegung einer landwirtschaftlichen Arbeitsmaschine als auch die Steuerung der an der Arbeitsmaschine angebrachten Arbeitsgeräte andererseits. Für größere Arbeitsmaschinen ist es bekannt, Sollfahrspuren zu definieren, entlang derer die Arbeitsmaschine den Feldbestand durchquert und abarbeitet. Ebenso ist es bekannt, das erforderliche Wenden der Arbeitsmaschine innerhalb des Vorgewendes von einer Sollfahrspur zur nächsten automatisiert durchführen zu lassen. Der Austritt aus dem Feldbestand und der Wiedereintritt in den Feldbestand macht es erforderlich, von den Arbeitsgeräten jeweils eine bestimmte Steuerungssequenz, bestehend aus einzelnen Steuerungsabläufen der Arbeitsgeräte, durchführen zu lassen. Eine solche Steuerungssequenz kann dadurch programmiert werden, dass eine Reihe von Steuerungsabläufen an einem jeweiligen Abstand von dem Übergangspunkt zwischen Vorgewende und Feldbestand - dem Vorgewendepunkt - ausgeführt werden soll. Dabei kann ein Steuerungsablauf sowohl vor Erreichen des Vorgewendepunktes als auch danach ausgeführt werden, so etwa bei einem vorgegebenen Abstand vor oder nach dem Vorgewendepunkt.

Die EP 2 020 170 A1 offenbart eine automatisch gelenkte landwirtschaftliche Arbeitsmaschine, welche automatisch im Vorgewende von einer Sollfahrspur zur nächsten wendet und in Abhängigkeit vom Abstand zum Vorgewendepunkt gemäß einer Programmierung die Steuerungsabläufe einer Steuerungssequenz abarbeitet. Nachteilig an diesem Stand der Technik ist jedoch, dass er voraussetzt, dass das Wenden der Arbeitsmaschine genauso wie vorgegeben erfolgen kann, damit die Steuerungssequenz gemäß ihrer Programmierung abgearbeitet werden kann. Dies ist jedoch dann nicht möglich, wenn etwa kein Raum für das automatische Wenden einer größeren Landwirtschaftsmaschine vorhanden ist. In so einem Fall, bei dem häufig kleinere, manuell gesteuerte Arbeitsmaschinen verwendet werden, kann es sein, dass das Wenden in mehreren Zügen erfolgen muss. Dementsprechend werden bestimmte Abstände zum Vorgewendepunkt während eines solchen manuellen Wendens gar nicht oder nur mit einer gleichzeitigen unpassenden Fahrtrichtung oder auch mehrmals wiederkehrend erreicht. Somit bleibt für den Benutzer der Landwirtschaftsmaschine unklar, ob und wann die Steuerungssequenz oder Teile von ihr beim Wenden und bei der Annäherung an den Vorgewendepunkt ausgeführt werden soll bzw. sollen.

Das Dokument US 2010/023229 A1 offenbart eine Steuerungsvorrichtung für eine landwirtschaftliche Arbeitsmaschine nach dem Oberbegriff des Anspruchs 1.

Der Erfindung liegt das Problem zugrunde, die bekannte Steuerungsvorrichtung zur Bestimmung der Auslösbarkeit einer Steuerungssequenz einer landwirtschaftlichen Arbeitsmaschine dahingehend weiterzuentwickeln, dass sie auch für manuell gelenkte landwirtschaftliche Arbeitsmaschinen und insbesondere beim Vorhandensein nur kleinerer Flächen zum Wenden eingesetzt werden kann.

Das obige Problem wird bezogen auf eine Steuerungsvorrichtung zur Bestimmung der Auslösbarkeit einer Steuerungssequenz einer landwirtschaftlichen Arbeitsmaschine gemäß dem Oberbegriff von Anspruch 1 durch die Merkmale des kennzeichnenden Teils von Anspruch 1 gelöst.

Bezogen auf eine landwirtschaftliche Arbeitsmaschine mit einer Steuerungsvorrichtung wird das obige Problem durch den Gegenstand des Anspruchs 12 gelöst.

Wesentlich für die Erfindung ist die Erkenntnis, dass für das Bestimmen der Auslösbarkeit einer Steuerungssequenz nicht nur die Gebietsinformation des Bearbeitungsfeldes und die Arbeitsmaschinenposition der landwirtschaftlichen Arbeitsmaschine, sondern auch ihre Fahrtrichtung zu berücksichtigen ist. Das Auslösen einer Steuerungssequenz ist nur dann sinnvoll, wenn die Fahrtbewegung der Arbeitsmaschine auch dazu führt, dass die Steuerungssequenz auch abgefahren werden kann. Das bedeutet insbesondere, dass gemäß der Fahrtrichtung der Vorgewendepunkt auch erreicht wird und ein Übergang zum Vorgewende in den Feldbestand oder umgekehrt erfolgt.

Solch ein Übergang kann etwa dann nicht stattfinden, wenn trotz eines geringen Abstands zum Vorgewendepunkt die Fahrtrichtung der Arbeitsmaschine so ist, dass sie vom Vorgewendepunkt weg weist.

Durch die Berücksichtigung der Fahrtrichtung wird es möglich, eine Steuerungssequenz dann nicht zu starten, wenn es nicht sinnvoll ist und andererseits dem Bediener der Arbeitsmaschine anzuzeigen, wann die Steuerungssequenz auslösbar ist und wann nicht. Das eröffnet dem Bediener u.a. die Möglichkeit, bewusst entlang der Grenze zwischen Feldbestand und Vorgewende - welche auch als Bestandsgrenze bezeichnet wird - zu fahren, ohne das Risiko einzugehen, dass unbeabsichtigterweise die Steuerungssequenz ausgelöst wird.

Mit dem Begriff "Auslösbarkeit" einer Steuerungssequenz ist hier also nicht die in physikalischer Sicht grundsätzlich mögliche Auslösbarkeit gemeint. Vielmehr geht es hier um die Auslösbarkeit einer Steuerungssequenz im Hinblick auf vorbestimmte Kriterien, die neben der Arbeitsmaschinenposition und der Gebietsinformation auch die Fahrtrichtung der Arbeitsmaschine umfassen.

Es darf darauf hingewiesen werden, dass der Arbeitsmaschine mehrere Steuerungssequenzen zugeordnet sein können, wobei die Auslösbarkeit jeder Steuerungssequenz in vorschlagsgemäßer Weise bestimmbar ist. Beispielsweise kommen regelmäßig in Abhängigkeit von dem ggf. an der Arbeitsmaschine angebrachten Arbeitsgerät ganz unterschiedliche Steuerungssequenzen zur Anwendung.

Die Erfindung sieht vor, ein Zulässigkeitsgebiet zu bestimmen, in welchem die Steuerungssequenz ausgeführt und damit ausgelöst werden soll. Je nachdem wie viele einzelne Steuerungsabläufe die Steuerungssequenz umfasst, kann dieses Zulässigkeitsgebiet unterschiedlich groß sein. Auf diese Weise kann dynamisch in Abhängigkeit der Steuerungssequenz ermittelt werden, wie eng etwa von einer Sollfahrspur zur anderen gewendet werden kann.

Die bevorzugte Ausgestaltung gemäß Anspruch 3 sieht eine Visualisierung dieses Zulässigkeitsgebiets vor, was für den Bediener eine verbesserte Hilfe beim Lenken der Arbeitsmaschine bedeutet.

Die bevorzugten Ausgestaltungen der Ansprüche 4 bis 8 betreffen bevorzugte Arten der Visualisierung dieses Zulässigkeitsgebiets in Abhängigkeit von der Arbeitsmaschinenposition und der Fahrtrichtung. Sie betreffen auch eine differenzierte Darstellung der Steuerungsabläufe der Steuerungssequenz in diesem Zulässigkeitsgebiet. Solche Darstellungen erlauben es dem Bediener der Arbeitsmaschine, durch die Rückkopplung mittels der Visualisierung sein Lenken der Arbeitsmaschine so zu justieren, dass die von ihm gewünschte Steuerungssequenz abgearbeitet werden kann. Es besteht also keine Unsicherheit mehr für ihn, ob bei der Annäherung an die Bestandsgrenze zwischen Feldbestand und Vorgewende die Steuerungssequenz ausgelöst wird oder nicht.

Im Folgenden wird die Erfindung anhand einer lediglich ein Ausführungsbeispiel darstellenden Zeichnung näher erläutert. In der Zeichnung zeigt
- Fig. 1: eine schematische Darstellung einer erfindungsgemäßen Steuerungsvorrichtung für eine landwirtschaftliche Arbeitsmaschine,
- Fig. 2: eine schematische Darstellung eines ersten Bearbeitungsfeldes mit einem Feldbestand, einem Vorgewende und Zulässigkeitsgebieten von Steuerungssequenzen, wobei verschiedene mögliche Arbeitsmaschinenpositionen dargestellt werden,
- Fig.3: eine schematische Darstellung eines zweiten Bearbeitungsfeldes und weiteren möglichen Arbeitsmaschinenpositionen,
- Fig. 4: eine schematische Darstellung eines dritten Bearbeitungsfeldes mit wiederum weitern verschiedenen möglichen Arbeitsmaschinenpositionen.

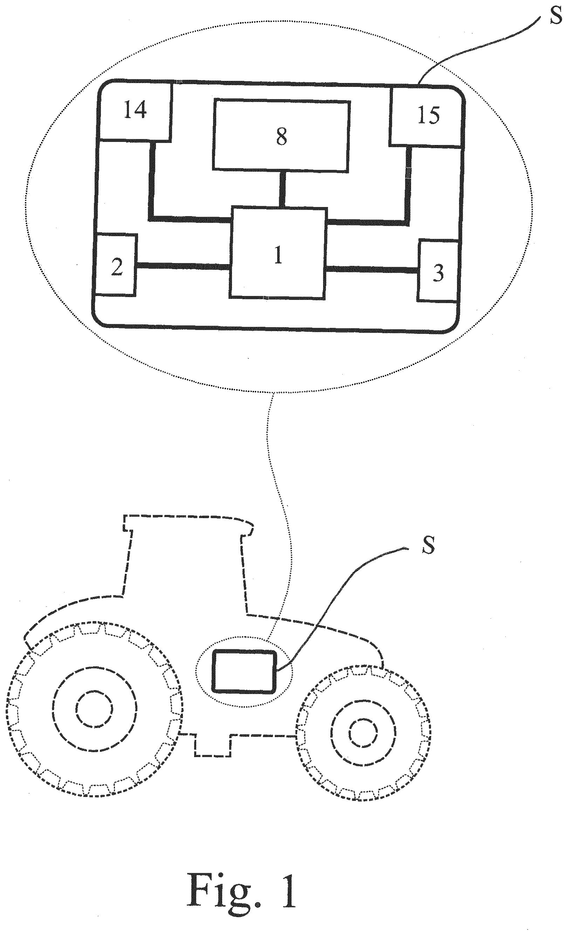

Die in der Fig. 1 dargestellte erfindungsgemäße Steuerungsvorrichtung S dient dazu zu bestimmen, ob eine Steuerungssequenz einer landwirtschaftlichen Arbeitsmaschine auslösbar ist. Die Steuerungsvorrichtung S kann dabei entweder werkseitig in der Arbeitsmaschine verbaut oder nachträglich angebracht worden sein.

Unter einer Steuerungssequenz ist eine Abfolge von mindestens einem Steuerungsablauf zu verstehen. Ein einzelner Steuerungsablauf bedeutet einen Zustandswechsel, einen Tätigkeitsbeginn oder eine sonstige Aktion eines Arbeitsgeräts. Unter einem solchen Arbeitsgerät kann jedwedes Werkzeug, Aggregat oder sonstiger steuerbarer Bestandteil einer landwirtschaftlichen Arbeitsmaschine verstanden werden. Ein einzelner Steuerungsablauf kann somit das Starten eines Motors, das Stoppen eines Motors, das Heben eines Arbeitsgeräts, das Senken eines Arbeitsgeräts, gegebenenfalls sogar lediglich eine Messung zu einer bestimmten Zeit oder einen ähnlichen Vorgang bedeuten. Das fragliche Arbeitsgerät kann dabei entweder unmittelbar an derjenigen Arbeitsmaschine angebracht sein, an welcher auch die Steuerungsvorrichtung S angeordnet ist, oder alternativ zu einer weiteren Arbeitsmaschine gehören, mit welcher die Steuerungsvorrichtung S kommuniziert. Diese weitere Arbeitsmaschine könnte etwa mit der erstgenannten landwirtschaftlichen Arbeitsmaschine und ggf. noch weiteren Arbeitsmaschinen einen Zug von landwirtschaftlichen Arbeitsmaschinen bilden.

Einem obigen Steuerungsablauf ist regelmäßig ein Startpunkt zugeordnet, an welchem der Steuerungsablauf ausgeführt werden soll. Ein solcher Startpunkt kann sowohl im Vorgewende als auch im Feldbestand liegen oder genau an der Bestandsgrenze zwischen Vorgewende und Feldbestand liegen. Der Startpunkt kann durch seine absolute Position, etwa durch GPS-Koordinaten bestimmt, oder aber im Verhältnis zu der Bestandsgrenze definiert werden.

Die erfindungsgemäße Steuerungsvorrichtung S umfasst eine Prozessorvorrichtung 1 zur Bestimmung der Auslösbarkeit der Steuerungssequenz. Bei dieser Prozessorvorrichtung 1 kann es sich um eine oder mehrere beliebige Datenverarbeitungseinheiten handeln. Die Bestimmung der Auslösbarkeit basiert auf einer Arbeitsmaschinenposition und einer Gebietsinformation zu einem Bearbeitungsfeld. Eine Steuerungssequenz gilt bei einer bestimmten Arbeitsmaschinenposition dann als auslösbar, wenn sie an dieser Arbeitsmaschinenposition von der Arbeitsmaschine bzw. den Arbeitsgeräten ausgeführt werden kann. Insbesondere ist eine Steuerungssequenz mit mehreren Steuerungsabläufen bei einer bestimmten Arbeitsmaschinenposition dann auslösbar, wenn der erste Steuerungsablauf an dieser Arbeitsmaschinenposition ausführbar ist und die Arbeitsmaschine sich so weiterbewegen kann, dass auch die weiteren Steuerungsabläufe ausführbar sind. Für die Auslösbarkeit kann insbesondere der Abstand zum dem Steuerungsablauf zugeordneten Startpunkt entscheidend sein.

Diese und weitere Informationen kann die Prozessorvorrichtung mittels einer Datenschnittstelle 2 empfangen, bei der es sich um den Datenbus eines Mikroprozessors, ein drahtgebundenen oder einen drahtlosen Datenbus oder ein sonstiges digitales Kommunikationsmedium handeln kann.

Die Arbeitsmaschinenposition ist eine Position der landwirtschaftlichen Arbeitsmaschine, welche etwa durch GPS-Koordinaten beschrieben. Bei der Arbeitsmaschinenposition kann es sich sowohl um die aktuelle, tatsächliche Position der Arbeitsmaschine als auch um eine fiktive, projizierte oder gedachte Position der Arbeitsmaschine handeln. Auf diese Weise kann auch die Auslösbarkeit der Steuerungssequenz zu einem späteren Zeitpunkt entsprechend einer projizierten Bewegung der Arbeitsmaschine bestimmt werden.

Die Gebietsinformation bezieht sich auf das Bearbeitungsfeld, welches das vorgesehene Einsatzgebiet der Arbeitsmaschine und dessen Umgebung umfasst, und gibt u.a. an die Lage des Feldbestands und des Vorgewendes an. Die Gebietsinformation kann zusätzlich auch darüber Aufschluss geben, welche Bereiche außerhalb des Bearbeitungsfeldes von der Arbeitsmaschine befahren werden können und welche nicht. So könnte etwa ein Feldweg neben dem Bearbeitungsfeld befahrbar sein, auch wenn er nicht zum Bearbeitungsfeld im engeren Sinne gehört. Andere Bereiche neben dem Bearbeitungsfeld mit Hindernissen können wiederum als nicht befahrbar identifiziert werden.

Eine nicht gegebene Auslösbarkeit der Steuerungssequenz kann sich etwa dadurch ergeben, dass die Arbeitsmaschinenposition zu weit entfernt von dem Feldbestand im Bearbeitungsfeld ist.

Ob die Steuerungssequenz basierend auf der jeweiligen Arbeitsmaschinenposition und der Gebietsinformation auslösbar ist, kann insbesondere durch ein erzeugtes Auslösbarkeitssignal kommuniziert werden.

Ein solches Auslösesignal kann durch eine Ausgabeschnittstelle 3 ausgegeben werden. Auch bei dieser kann es sich um den Datenbus eines Mikroprozessors, ein drahtgebundenen oder einen drahtlosen Datenbus oder ein sonstiges digitales Kommunikationsmedium handeln. Die Ausgabeschnittstelle 3 kann auch identisch zur Datenschnittstelle 2 sein.

Erfindungsgemäß basiert die Bestimmung der Auslösbarkeit auch auf einer Fahrtrichtung der Arbeitsmaschine. Die Fahrtrichtung kann entweder durch Sensoren direkt erfasst werden, oder aber aus der unmittelbar vorher zurückgelegten Strecke der Arbeitsmaschine abgeleitet werden. Insbesondere lässt sich auch dann eine solche Fahrtrichtung definieren, wenn die Arbeitsmaschine gerade nicht in Bewegung ist.

Erfindungsgemäß kann also etwa bestimmt werden, dass die Steuerungssequenz bei der aktuellen Arbeitsmaschinenposition nicht auslösbar ist, obwohl die Arbeitsmaschinenposition zwar in einem Bereich liegt, welcher das Auslösen der Steuerungssequenz erlauben würde, jedoch die Fahrtrichtung der Arbeitsmaschine zum Auslösen der Steuerungssequenz ungeeignet ist.

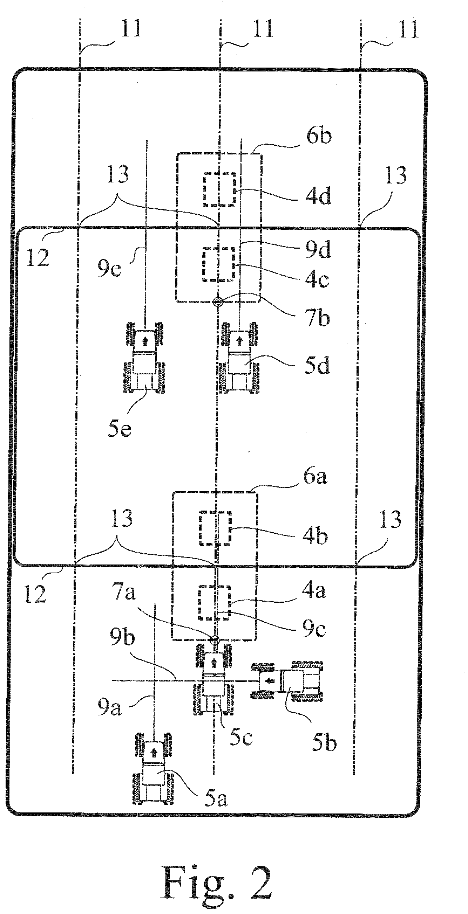

In der Fig. 2 sind insbesondere die beiden Startpunkte 4a und 4b einer Steuerungssequenz mit zwei Steuerungsabläufen abgebildet. Eine erste Anordnung 5a der landwirtschaftlichen Arbeitsmaschine weist eine Arbeitsmaschinenposition auf, welche von dem Startpunkt 4a zu weit entfernt ist. Für diese Anordnung 5a würde die Prozessorvorrichtung eine nicht vorhandene Auslösbarkeit der Steuerungssequenz bestimmen, eben wegen des zu großen Abstands.

Eine zweite Anordnung 5b der Arbeitsmaschine weist einen kleineren Abstand zum Startpunkt 4a auf. Allerdings ist hier die Fahrtrichtung der Arbeitsmaschine so, dass sie insbesondere zu der Abarbeitungsrichtung der Steuerungssequenz, welche z.B. durch die beiden Startpunkte 4a und 4b definiert wird, nicht passt. Aus diesem Grunde wird auch für die Anordnung 5b die Prozessorvorrichtung 1 eine nicht gegebene Auslösbarkeit der Steuerungssequenz bestimmen.

Eine dritte Anordnung 5c der Arbeitsmaschine hingegen weist sowohl eine passende Arbeitsmaschinenposition als auch eine passende Fahrtrichtung zu den Startpunkten 4a und 4b und damit zu der Steuerungssequenz insgesamt auf. Hier würde bestimmt werden, dass die Steuerungssequenz auslösbar ist.

Obwohl es durchaus denkbar ist, dass die Bestimmung der Auslösbarkeit der Steuerungssequenz auf der Arbeitsmaschinenposition, der Fahrtrichtung der Arbeitsmaschine und der Gebietsinformation basiert ohne Berücksichtigung der Steuerungssequenz - indem etwa nur auf den Abstand und die Fahrtrichtung in Bezug auf die Bestandsgrenze abgestellt wird -, so ist es doch bevorzugt, dass die Bestimmung der Auslösbarkeit auch auf der Steuerungssequenz basiert, insbesondere auf dem jeweiligen Startpunkt eines Steuerungsablaufs der Steuerungssequenz.

Sowohl was die Fahrtrichtung der Arbeitsmaschine als auch was ihre Arbeitsmaschinenposition angeht, kann ein bestimmter Toleranzbereich gegeben sein. Aus diesem Grunde ist es vorteilhafterweise vorgesehen, dass die Prozessorvorrichtung 1 dazu eingerichtet ist, basierend auf der Gebietsinformation und der Steuerungssequenz ein Zulässigkeitsgebiet 6a-d zu bestimmen, welches vorzugsweise im Wesentlichen rechteckig ist. Ein solches Zulässigkeitsgebiet 6a-d kann insbesondere den Bereich angeben, in welchem sich die Arbeitsmaschine bei der Abarbeitung der Steuerungssequenz befinden kann. Die Lage, Größe und Ausdehnung der Zulässigkeitsgebiets 6a-d kann von dem Umfang der Steuerungssequenz und ihren weiteren Parametern abhängig sein. Grundsätzlich kann sich das Zulässigkeitsgebiet auch außerhalb des Bearbeitungsfelds erstrecken.

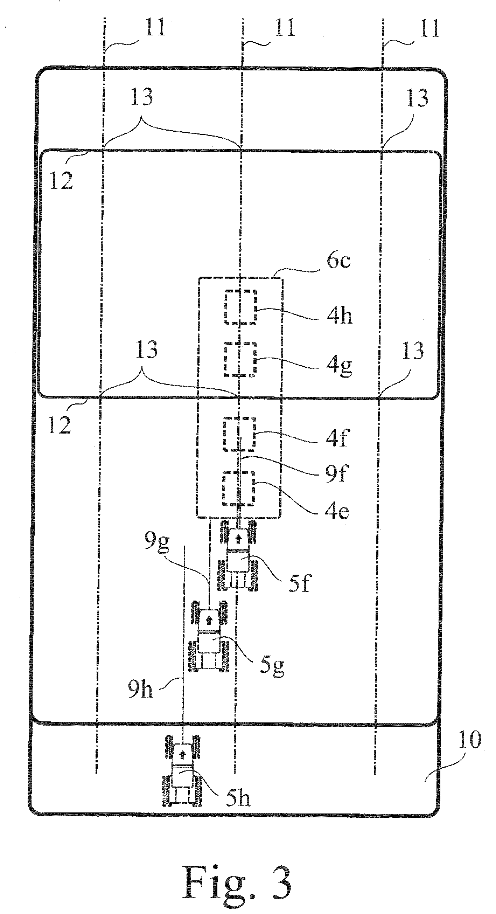

Je nach Art und Umfang der Steuerungssequenz kann das Zulässigkeitsgebiet 6a-d eine unterschiedliche Ausdehnung haben. So weist das Zulässigkeitsgebiet 6a in der Fig. 2 die beiden Startpunkte 4a und 4b auf und hat eine kleinere Ausdehnung als das Zulässigkeitsgebiet 6c der Fig. 3 mit den vier Startpunkten 4-h. Entscheidend ist allerdings nicht notwendigerweise die Anzahl der Startpunkte sondern etwa ihre entweder kompakte oder ausgedehnte Anordnung.

Vorzugsweise weist dieses Zulässigkeitsgebiet einen Auslösepunkt 7a, 7b auf. Ein solcher Auslösepunkt 7a, 7b ist ein Punkt, an dem die Arbeitsmaschine in das Zulässigkeitsgebiet 6a-d hineinfahren kann und an dem vorteilhafterweise die Steuerungssequenz bei diesem Hineinfahren gestartet wird.

Um dem Bediener der Arbeitsmaschine das manuelle Lenken zu erleichtern, ist besonders bevorzugt, dass die Steuerungsvorrichtung S eine Visualisierungsvorrichtung 8 zur grafischen Ausgabe des Zulässigkeitsgebiets 6a-d und/oder des Auslösepunkts 7a, 7b umfasst. Auf diese Weise kann der Bediener der Arbeitsmaschine seine aktuelle Position und seine aktuelle Lage zu dem Zulässigkeitsgebiet 6a-d und/oder dem Auslösepunkt 7a, 7b, 7c, 7d in Beziehung setzen und beim Lenken der Arbeitsmaschine diese dementsprechend justieren.

Bezugnehmend wiederum auf die Darstellung der Fig. 2 würde der Bediener in der Anordnung 5a erkennen, dass er an das Zulässigkeitsgebiet 6a näher heranfahren muss. In der Anordnung 5b würde er erkennen, dass der von der Arbeitsmaschine gebildete Winkel zum Zulässigkeitsgebiet 6a, also die Fahrtrichtung der Arbeitsmaschine, korrigiert werden muss und in der Anordnung 5c würde er erkennen, dass er bei weiterer Geradeausfahrt der Arbeitsmaschine das Zulässigkeitsgebiet 6a betreten und den Auslösepunkt 7a überfahren würde.

Hierauf aufbauend ist bevorzugt vorgesehen, dass die Visualisierungsvorrichtung 8 dazu eingerichtet ist, basierend aus der Arbeitsmaschinenposition und der Fahrtrichtung das Zulässigkeitsgebiet 6a-d grafisch unterschiedlich auszugeben. Dies kann in weiter bevorzugter Weise dadurch geschehen, dass die Visualisierungsvorrichtung 8 dazu eingerichtet ist, eine erste Darstellung des Zulässigkeitsgebiets 6a-d auszugeben, wenn die Steuerungssequenz bei der aktuellen Arbeitsmaschinenposition auslösbar ist und eine zweite Darstellung des Zulässigkeitsgebiets 6a-d auszugeben, wenn die Steuerungssequenz bei der aktuellen Arbeitsmaschinenposition nicht auslösbar ist. Die erste und die zweite Darstellung können sich in irgendeiner deutlich sichtbaren Eigenschaft unterscheiden, so etwa in ihrer Farbe. Alternativ oder zusätzlich könnte die zweite Darstellung sich etwa dadurch von der ersten Darstellung unterscheiden, dass die zweite Darstellung ein überlagertes Ausrufezeichen aufweist.

Bei einer farblich unterschiedlichen Darstellung könnte beispielsweise in der Anordnung 5a das Zulässigkeitsgebiet 6a rot gekennzeichnet werden, da wegen zu großen Abstands der Arbeitsmaschine gemäß ihrer Arbeitsmaschinenposition die Steuerungssequenz an der Anordnung 5a nicht ausgeführt werden kann, eine Auslösung an der aktuellen Arbeitsmaschinenposition also nicht in Frage kommt. Ebenso könnte in der Anordnung 5b das Zulässigkeitsgebiet 6a rot ausgeführt werden, da in der Anordnung 5b wegen der Fahrtrichtung der Arbeitsmaschine die Steuerungssequenz nicht ausgeführt und damit nicht ausgelöst werden kann. Andererseits könnte das Zulässigkeitsgebiet 6a in der Anordnung 5c grün ausgegeben werden, da in dieser Anordnung sowohl die Arbeitsmaschinenposition als auch die Fahrtrichtung ein Auslösen der Steuerungssequenz erlaubt.

Eine solch unterschiedliche Darstellung kann auch noch weiter differenziert erfolgen. Bevorzugt ist vorgesehen, dass die Prozessorvorrichtung 1 dazu eingerichtet ist, basierend auf der Arbeitsmaschinenposition und der Fahrtrichtung eine Bewegungsprojektion 9a-k sowie die Auslösbarkeit der Steuerungssequenz entlang der Bewegungsprojektion 9a-k zu bestimmen.

Bei der Bewegungsprojektion 9a-k kann es sich im Wesentlichen um eine Gerade handeln, welche von der Arbeitsmaschinenposition ausgeht und zwar in Richtung ihrer Fahrtrichtung. Alternativ oder zusätzlich kann bei der Bestimmung der Bewegungsprojektion auch die aktuelle Lenkerstellung der Arbeitsmaschine in einer Weise berücksichtigt werden, nach der die Bewegungsprojektion 9a-k eine der Lenkerstellung entsprechende Kurve bildet.

Bei dieser bevorzugten Ausführungsform ist weiter vorgesehen, dass die Visualisierungsvorrichtung 8 dazu eingerichtet ist, eine dritte Darstellung des Zulässigkeitsgebiets 6a-d auszugeben, wenn die Steuerungssequenz bei der aktuellen Arbeitsmaschinenposition nicht auslösbar ist und die Prozessorvorrichtung 1 bestimmt hat, dass an einer Arbeitsmaschinenposition auf der Bewegungsprojektion 9a-k mit einer Fahrtrichtung gemäß der Bewegungsprojektion (9a-k) die Steuerungssequenz auslösbar ist. Diese dritte Darstellung des Zulässigkeitsgebiets 6a-d könnte beispielsweise in gelber Farbe erfolgen.

In der Fig. 2 ist eine weitere Anordnung 5d der landwirtschaftlichen Arbeitsmaschine dargestellt. In dieser Anordnung 5d befindet sich die Arbeitsmaschine in einer gewissen Entfernung zu dem Zulässigkeitsgebiet 6b. Bei der Arbeitsmaschinenposition gemäß der Anordnung 5d kann die entsprechende Steuerungssequenz mit den beiden Startpunkten 4c und 4d nicht ausgelöst werden. Allerdings ergibt sich eine Bewegungsprojektion 9d aus der Arbeitsmaschinenposition und Fahrtrichtung in der Anordnung 5d, welche auf das Zulässigkeitsgebiet 6b in der Nähe der Auslösepunktes 7b trifft. Folglich ist an einer Arbeitsmaschinenposition auf der Bewegungsprojektion 9d die Steuerungssequenz auslösbar - was von der Prozessorvorrichtung 1 bestimmt werden kann - und das Zulässigkeitsgebiet 6b würde in der Anordnung 5d in einer dritten Darstellung durch die Visualisierungsvorrichtung 8 ausgegeben werden, beispielsweise also in gelber Farbe.

Die weitere Anordnung 5e in der Fig. 2 weist eine Arbeitsmaschinenposition und eine Fahrtrichtung auf, aus der sich eine Bewegungsprojektion 9e ergibt, welche an dem Zulässigkeitsgebiet 6b vorbeiführt. Folglich würde in der Anordnung 5e eine Darstellung der Zulässigkeitsgebiets 6b in roter Farbe erfolgen.

Die Fig. 3 zeigt ein weiteres Bearbeitungsfeld mit anderen entsprechenden Gebietsinformationen. Auch hier ist eine Steuerungssequenz mit einem entsprechenden Zulässigkeitsgebiet 6c vorgegeben. Eine Anordnung 5f der Arbeitsmaschine lässt sowohl hinsichtlich ihrer Arbeitsmaschinenposition als auch hinsichtlich ihrer Fahrtrichtung das Auslösen der Steuerungssequenz zu. In dieser Anordnung 5f würde das Zulässigkeitsgebiet 6c also grün dargestellt. Ein Rekurs auf die Bewegungsprojektion 9f ist somit nicht notwendig.

In der weiteren Anordnung 5g würde das Zulässigkeitsgebiet 6c gelb dargestellt werden, da eine entsprechende Bewegungsprojektion 9g so in das Zulässigkeitsgebiet 6c hineinführt, dass dann sowohl Arbeitsmaschinenposition als auch Fahrtrichtung der Arbeitsmaschine ein Auslösen der Steuerungssequenz zulassen. Die Anordnung 5h der Arbeitsmaschine wiederum befindet sich in einem nicht zulässigen Außengebiet 10 außerhalb des Bearbeitungsfeldes. Unabhängig von einer Bewegungsprojektion wird also bei der Anordnung 5h in dem unzulässigen Außengebiet 10 das Zulässigkeitsgebiet 6c rot dargestellt. Auch hier kommt es auf die Bewegungsprojektion 9h nicht an.

Wie oben erläutert, umfasst die Steuerungssequenz vorzugsweise eine Abfolge von Steuerungsabläufen. Weiter ist dabei bevorzugt, dass die Prozessorvorrichtung 1 dazu eingerichtet ist, jedem Steuerungsablauf eine Startpunkt 4a-1 zuzuordnen. Noch weiter ist bevorzugt, dass die Visualisierungsvorrichtung 8 dazu eingerichtet ist, den jeweiligen Startpunkt 4a-1 anzuzeigen.

Ein solcher Startpunkt 4a-1 kann entweder direkt eingeben werden, etwa durch seine geographischen oder GPS-Koordinaten, oder er kann sich aus einer relativen Position beispielsweise in Bezug zu einem Teil der Gebietsinformation ergeben. Die Anzeige des Startpunkts 4a-1 kann so erfolgen, dass an diesem Startpunkt 4a-1 ein Icon dargestellt wird, welches auch den an dem Startpunkt auszuführenden Steuerungsablauf skizziert. Es kann also für einen Hebe- oder einen Senkvorgang eines Arbeitsgeräts bzw. für den Start- oder Stopp-Vorgang eines Arbeitsgeräts jeweils ein grafisches Icon vorgesehen sein, welches auf diesen speziellen Vorgang des Arbeitsgeräts hinweist.

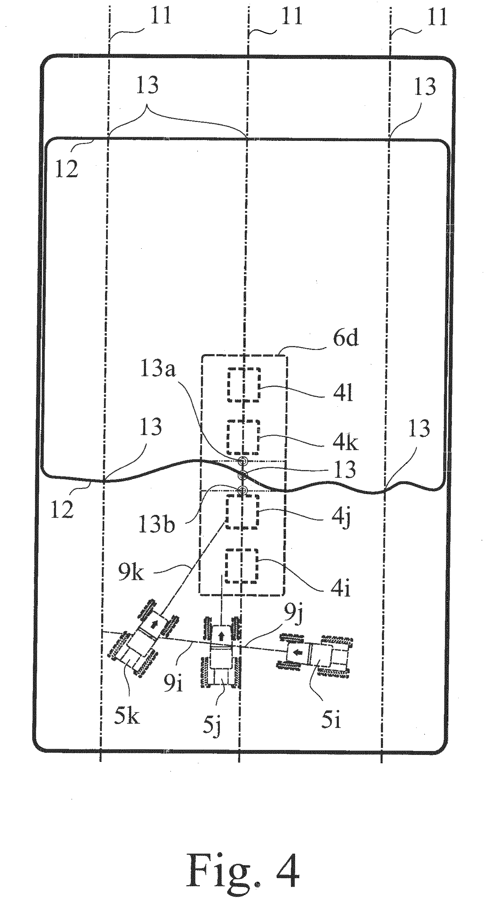

In der Fig. 2 liegen im Zulässigkeitsgebiet 6a zwei Startpunkte 4a und 4b der beiden Steuerungsabläufe der zugeordneten Steuerungssequenz. Ebenso zeigt in der Fig. 2 das Zulässigkeitsgebiet 6b die Startpunkte 4c und 4d der beiden Steuerungsabläufe der diesem Zulässigkeitsgebiet 6b zugeordneten Steuerungssequenz. In der Fig. 3 wiederum sind in dem Zulässigkeitsgebiet 6c die Startpunkte 4e-h angezeigt, welche jeweils einem Steuerungsablauf der entsprechenden Steuerungssequenz zugeordnet sind. Schließlich zeigt die Fig. 4 das Zulässigkeitsgebiet 6d mit den Startpunkten 4i-1.

Eine weitere bevorzugte Ausführungsform sieht vor, dass die Prozessorvorrichtung 1 dazu eingerichtet ist, basierend auf der Arbeitsmaschinenposition, der Fahrtrichtung und dem jeweiligen Startpunkt 4a-1, die Auslösbarkeit jedes Steuerungsablaufs der Steuerungssequenz zu bestimmen. Vorzugsweise ist die Prozessorvorrichtung 1 dazu eingerichtet, diese Bestimmung auch basierend auf der Bewegungsprojektion 9a-k auszuführen. Insbesondere ist bevorzugt, dass die Visualisierungseinrichtung 8 dazu eingerichtet ist, die Auslösbarkeit jedes Steuerungsablaufs der Steuerungssequenz anzuzeigen.

Auf diese Weise wird es möglich, nicht nur eine Angabe darüber zu machen, ob die Steuerungssequenz insgesamt auslösbar ist, sondern die Auslösbarkeit für jeden Steuerungsablauf der Steuerungssequenz individuell anzugeben. Der Nutzen einer solchen Möglichkeit wird insbesondere in der Fig. 4 dargestellt. In dieser sind die drei Anordnungen 5i, 5j und 5k der Arbeitsmaschine gezeigt. Ferner ist das Zulässigkeitsgebiet 6d gezeigt mit den Startpunkten 4i-1 der vier Steuerungsabläufe einer Steuerungssequenz. In der Anordnung 5i ist die Fahrtrichtung der Arbeitsmaschine so, dass ihre Bewegungsprojektion 9i vollständig an dem Zulässigkeitsgebiet 6d vorbeiführt. Folglich ist keiner der Steuerungsabläufe der Steuerungssequenz entlang der Bewegungsprojektion 9i auslösbar. Es wird also jeder einzelne Steuerungsablauf als nicht auslösbar angezeigt. Dies kann durch eine spezielle Darstellung der jeweiligen, dem Steuerungsablauf zugeordneten Startpunkt 4i-4l erfolgen, beispielsweise in einer roten Farbe.

In der Anordnung 5j wiederum ist sowohl die Arbeitsmaschinenposition als auch die Fahrtrichtung der Arbeitsmaschine so, dass alle Steuerungsabläufe der Steuerungssequenz ausgelöst werden können bei einer Bewegung der Arbeitsmaschine gemäß ihrer Fahrtrichtung, was insbesondere aus ihrer Bewegungsprojektion 9j hervorgeht. Es können also alle Steuerungsabläufe bzw. ihre jeweilige Startpunkt 4-1 in dieser Anordnung 5j etwa in grüner Farbe dargestellt werden. Bei der weiteren Anordnung 5k weist diese eine Bewegungsprojektion 9k auf, welche zwar in einem größeren Abstand von der Startpunkt 4i verläuft, sich jedoch in ihrem weiteren Verlauf ausreichend an den Startpunkt 4j annähert. Aus diesem Grunde kann etwa der Startpunkt 4i in einer roten Darstellung gemäß einer nicht vorhandenen Auslösbarkeit aus der Anordnung 5k und die Startpunkt 4j in einer grünen Darstellung gemäß einer gegebenen Auslösbarkeit aus dieser Anordnung 5k dargestellt werden.

Die Startpunkte 4k und 4l können ebenfalls in einer grünen Darstellung angezeigt werden, insbesondere da es bevorzugt ist, dass bei Erreichen eines Startpunktes, dessen Steuerungsablauf dann auslösbar ist, wie hier der Startpunkt 4j, eine automatische Steuerung der Arbeitsmaschine einsetzen kann, welche die Arbeitsmaschine auf eine Spur setzt, von der die weiteren Steuerungsabläufe mit ihren Startpunkten 4k und 4l angefahren werden. Sollte diese Möglichkeit nicht bestehen, kann trotz einer gegebenen Auslösbarkeit des betreffenden Steuerungsablaufs am Startpunkt 4j auch eine Darstellung der weiteren Startpunkte 4k und 4l in einer roten Farbe entsprechend einer nicht möglichen Auslösbarkeit dargestellt sein, solange die Arbeitsmaschine in ihrer Arbeitsmaschinenposition und Fahrtrichtung nicht entsprechend korrigiert wird.

Regelmäßig ist für ein Bearbeitungsfeld eine Reihe von Sollfahrspuren 11 vorgesehen, welche zumeist parallel und in einem Abstand verlaufen, welcher der Arbeitsbreite der Arbeitsmaschine entspricht. Indem die Arbeitsmaschine diese Sollfahrspuren 11 abfährt, kann der gesamte Feldbestand ohne wesentliche Lücken oder Überschneidungen abgearbeitet werden. Die beschriebenen Steuerungssequenzen werden regelmäßig bei einem Übergang der Arbeitsmaschine von dem Vorgewende in den Feldbestand oder umgekehrt entlang einer von der Landwirtschaftsmaschine abgefahrenen Sollfahrspur 11 ausgeführt.

Dabei wird regelmäßig ein Vorgewendepunkt 13 auf der Sollfahrspur 11 festgelegt, welcher einen Übergang zwischen Vorgewende und Feldbestand entweder tatsächlich darstellt - in welchem Falle der Vorgewendepunkt 13 auf der Bestandsgrenze 12 liegen würde - oder einen solchen Übergang fingiert. Ein solcher Vorgewendepunkt 13 kann als Referenzpunkt für die Startpunkte 4a-1 der Steuerungssequenz dienen. Folglich ist es bevorzugt, dass die Gebietsinformation eine Information über eine Bestandsgrenze 12 umfasst.

Weiter ist bevorzugt, dass die Bestimmung der Auslösbarkeit auch auf einem Vorgewendepunkt 13 basiert, wobei entweder die Information über eine Bestandsgrenze 12 den Vorgewendepunkt 13 und eine Sollfahrspur 11 umfasst oder die Prozessorvorrichtung 1 dazu eingerichtet ist, den Vorgewendepunkt 13 aus der Sollfahrspur 11 und der Gebietsinformation zu bestimmen.

Es kann also der Vorgewendepunkt 13 entweder direkt eingegeben oder übermittelt werden oder der Vorgewendepunkt 13 sich aus der Sollfahrspur 11 und der Gebietsinformation ermitteln lassen, insbesondere kann der Vorgewendepunkt 13 durch den Schnittpunkt der Sollfahrspur 11 mit der Bestandsgrenze 12 identifiziert werden.

Ein Vorgewendepunkt 13 in diesem Sinne liegt grundsätzlich bei jedem Überqueren der Bestandsgrenze 12 vor, also sowohl bei einem Übergang vom Vorgewende in den Feldbestand als auch bei einem Übergang vom Feldbestand ins Vorgewende. Regelmäßig wird bei einem Eintritt in den Feldbestand eine Steuerungssequenz ausgeführt, welche dann bei einem darauffolgenden Austritt aus dem Feldbestand in das Vorgewende in umgekehrter Reihenfolge abgearbeitet wird.

Besonderheiten können sich ergeben, wenn die Bestandsgrenze 12 nicht stets gerade und rechtwinklig zur Sollfahrspur 11 verläuft. Insbesondere in diesen Fällen kann eine variable Verschiebung des Vorgewendepunkts 13 sinnvoll sein. Durch eine solche Verschiebung des Vorgewendepunktes 13 und eine Definition der Startpunkte 4a-1 der Steuerungssequenz relativ zu dem Vorgewendepunkt 13 kann erreicht werden, dass Steuerungsabläufe, die genau am Vorgewendepunkt 13 abgearbeitet werden sollen, entweder erst dann abgearbeitet werden, wenn die Landwirtschaftsmaschine vollständig in den Feldbestand eingetreten ist, oder aber noch bevor die Landwirtschaftsmaschine die Bestandsgrenze 12 erreicht.

Es ist also bevorzugt, dass die Steuerungsvorrichtung S eine Eingabevorrichtung 14 für eine variable Verschiebung des Vorgewendepunkts 13 umfasst. Vorzugsweise erfolgt diese variable Verschiebung entlang der Sollfahrspur 11. In so einem Fall kann es sein, dass sich alle Startpunkte 4a-1 der jeweiligen Steuerungssequenz gemäß der Verschiebung des Vorgewendepunktes 13 entsprechend mit verschieben. Auf diese Weise kann die Steuerungssequenz sehr leicht angepasst werden, ohne dass jeder einzelne Steuerungsablauf der Steuerungssequenz individuell verschoben werden müsste.

In diesem Zusammenhang wird speziell auf die Fig. 4 verweisen, in welcher die Startpunkte 4i, 4j, 4k und 4l der dem Zulässigkeitsgebiet 6d zugeordneten Steuerungssequenz abgebildet sind. Die Bestandsgrenze 12 verläuft in der Umgebung ihres Schnittpunktes mit der Sollfahrspur 11 nicht gerade. Folglich kann der sich aus dem Schnitt der Bestandsgrenze 12 mit der Sollfahrspur ergebende Vorgewendepunkt 13 entweder soweit vorgeschoben werden, dass die gesamte Arbeitsbreite innerhalb des Feldbestandes liegt, was dem Vorgewendepunkt 13a entsprechen würde, oder aber soweit zurück verschoben werden, dass am Vorgewendepunkt 13b die gesamte Arbeitsbreite der Arbeitsmaschine noch im Vorgewende ist. Entsprechend würden sich die Startpunkte 4i-1 sowie das Zulässigkeitsgebiet 6d um dieselbe Strecke mit verschieben.

Bevorzugt ist weiterhin, dass das Zulässigkeitsgebiet 6a-d, welches vorzugsweise den Vorgewendepunkt 13 umfasst, wesentlich symmetrisch zur Sollfahrspur 11 ist.

Die Bestimmung der Auslösbarkeit kann einerseits dazu dienen, dem Bediener der Arbeitsmaschine anzuzeigen, dass die Steuerungssequenz nun ausgelöst und damit ausgeführt und abgearbeitet werden kann. Alternativ dazu ist es bevorzugt, dass die Prozessorvorrichtung 1 dazu eingerichtet ist, die Steuerungssequenz auszulösen, wenn die Steuerungssequenz an der aktuellen Arbeitsmaschinenposition auslösbar ist. Hierzu kann die Prozessorvorrichtung 1 insbesondere eine Auslöseeinheit 15 ansteuern. Auf diese Weise kann die Steuerungssequenz automatisch ausgelöst werden, wenn die Prozessorvorrichtung 1, insbesondere in Anbetracht der Fahrtrichtung und Arbeitsmaschinenposition, bestimmt hat, dass das Auslösen der Steuerungssequenz möglich ist.

Eine erfindungsgemäße landwirtschaftliche Arbeitsmaschine weist eine erfindungsgemäße Steuerungsvorrichtung S auf. Besonders bevorzugt ist, dass es sich bei der erfindungsgemäßen Arbeitsmaschine um eine selbstfahrende Arbeitsmaschine handelt. Zu ihnen zählen etwa Mähdrescher, welche häufig in einem Bearbeitungsfeld mit nur kleinen Vorgewenden eingesetzt werden.

Insbesondere kann es sich bei der Arbeitsmaschine um eine Zugmaschine, beispielsweise um einen Traktor, handeln. Gerade für den Fall, dass entweder die Arbeitsmaschine keine Funktion des automatischen Wendens an einem Vorgewende bietet, oder aber sowohl das Vorgewende als auch angrenzende Bereiche, wie etwa Feldwege, nicht genug Raum für ein automatisches Wenden bieten und also der Bediener der Arbeitsmaschine ein manuelles Wendemanöver ausführen muss, bietet die Erfindung deutliche Vorteile.

Während eines solchen Wendemanövers wird regelmäßig die Arbeitsmaschine in der Umgebung der Bestandsgrenze 12 und also von Vorgewendepunkten 13 bewegt werden müssen. Der Bediener kann aber durch eine geeignete Positionierung der Arbeitsmaschine zu den Startpunkten der Steuersequenz und insbesondere durch eine Ausrichtung der Fahrtrichtung der Arbeitsmaschine, welche z. B. wesentlich rechtwinkelig zu der Sollfahrspur 11 ist, sicherstellen und durch die Visualisierungseinheit 8 auch überprüfen, dass während des Wendens keiner der Steuerungsabläufe von alleine ausgelöst wird. Auf diese Weise bleibt die Möglichkeit bestehen, automatisierte Steuerungssequenzen an der Bestandsgrenze 12 auszuführen und gleichzeitig zu gewährleisten, dass diese einerseits vollständig ausgeführt werden können und andererseits nur dann ausgelöst werden, wenn dies auch geschehen soll.

Die erfindungsgemäße Steuerungsvorrichtung S kann aber auch in landwirtschaftlichen Arbeitsmaschinen eingesetzt werden, welche ein automatisches Wenden im Vorgewende auszuführen in der Lage sind.

## Patentansprüche

1. Steuerungsvorrichtung für eine landwirtschaftliche Arbeitsmaschine, wobei der landwirtschaftlichen Arbeitsmaschine eine Steuerungssequenz zugeordnet ist, wobei eine Prozessorvorrichtung (1) zur Bestimmung der Auslösbarkeit der Steuerungssequenz basierend auf einer Arbeitsmaschinenposition und einer Gebietsinformation zu einem Bearbeitungsfeld vorgesehen ist
**dadurch gekennzeichnet,**
**dass** die Bestimmung der Auslösbarkeit auch auf einer Fahrtrichtung der Arbeitsmaschine basiert und wobei die Prozessorvorrichtung (1) dazu eingerichtet ist, basierend auf der Gebietsinformation und der Steuerungssequenz ein, insbesondere im Wesentlichen rechteckiges, Zulässigkeitsgebiet (6a-d), vorzugsweise mit einem Auslösepunkt (7a, 7b), zu bestimmen.

2. Steuerungsvorrichtung nach Anspruch 1, **dadurch gekennzeichnet, dass** die Bestimmung der Auslösbarkeit auch auf der Steuerungssequenz basiert.

3. Steuerungsvorrichtung nach Anspruch 2, **dadurch gekennzeichnet, dass** die Steuerungsvorrichtung (S) eine Visualisierungsvorrichtung (8) zur grafischen Ausgabe des Zulässigkeitsgebiets (6a-d) und/oder des Auslösepunkts (7a, 7b) umfasst.

4. Steuerungsvorrichtung nach Anspruch 3, **dadurch gekennzeichnet, dass** die Visualisierungsvorrichtung (8) dazu eingerichtet ist, basierend auf der Arbeitsmaschinenposition und der Fahrtrichtung das Zulässigkeitsgebiet (6a-d) grafisch unterschiedlich auszugeben.

5. Steuerungsvorrichtung nach Anspruch 4, **dadurch gekennzeichnet, dass** die Visualisierungsvorrichtung (8) dazu eingerichtet ist, eine erste Darstellung des Zulässigkeitsgebiets (6a-d) auszugeben, wenn die Steuerungssequenz bei der aktuellen Arbeitsmaschinenposition auslösbar ist und eine zweite Darstellung des Zulässigkeitsgebiets (6a-d) auszugeben, wenn die Steuerungssequenz bei der aktuellen Arbeitsmaschinenposition nicht auslösbar ist.

6. Steuerungsvorrichtung nach Anspruch 5, **dadurch gekennzeichnet, dass** die Prozessorvorrichtung (1) dazu eingerichtet ist, basierend auf der Arbeitsmaschinenposition und der Fahrtrichtung eine Bewegungsprojektion (9a-k) sowie die Auslösbarkeit der Steuerungssequenz entlang der Bewegungsprojektion (9a-k) zu bestimmen, wobei die Visualisierungsvorrichtung (8) dazu eingerichtet ist, eine dritte Darstellung des Zulässigkeitsgebiets (6a-d) auszugeben, wenn die Steuerungssequenz bei der aktuellen Arbeitsmaschinenposition nicht auslösbar ist und die Prozessorvorrichtung (1) bestimmt hat, dass an einer Arbeitsmaschinenposition auf der Bewegungsprojektion (9a-k) mit einer Fahrtrichtung gemäß der Bewegungsprojektion (9a-k) die Steuerungssequenz auslösbar ist.

7. Steuerungsvorrichtung nach einem der Ansprüche 1 bis 6, **dadurch gekennzeichnet, dass** die Steuerungssequenz eine Abfolge von Steuerungsabläufen umfasst, vorzugsweise, dass die Prozessorvorrichtung (1) dazu eingerichtet ist, jedem Steuerungsablauf einen Startpunkt (4a-l) zuzuordnen, insbesondere, wobei die Visualisierungseinrichtung (8) dazu eingerichtet ist, den jeweiligen Startpunkt (4a-l) anzuzeigen.

8. Steuerungsvorrichtung nach Anspruch 7, **dadurch gekennzeichnet, dass** die Prozessorvorrichtung (1) dazu eingerichtet ist, basierend auf der Arbeitsmaschinenposition, der Fahrtrichtung und dem jeweiligen Startpunkt (4a-l), vorzugsweise auch basierend auf der Bewegungsprojektion (9a-k), die Auslösbarkeit jedes Steuerungsablaufs der Steuerungssequenz zu bestimmen, insbesondere,
wobei die Visualisierungseinrichtung (8) dazu eingerichtet ist, die Auslösbarkeit jedes Steuerungsablaufs der Steuerungssequenz anzuzeigen.

9. Steuerungsvorrichtung nach einem der Ansprüche 1 bis 8, **dadurch gekennzeichnet, dass** die Gebietsinformation eine Information über eine Bestandsgrenze (12) umfasst, vorzugsweise, dass die Bestimmung der Auslösbarkeit auch auf einem Vorgewendepunkt (13) basiert, wobei die Information über eine Bestandsgrenze (12) den Vorgewendepunkt (13) und eine Sollfahrspur (11) umfasst oder die Prozessorvorrichtung (1) dazu eingerichtet ist, den Vorgewendepunkt (13) aus der Sollfahrspur (11) und der Gebietsinformation zu bestimmen.

10. Steuerungsvorrichtung nach Anspruch 9, **dadurch gekennzeichnet, dass** eine Eingabevorrichtung (14) für eine variable Verschiebung, vorzugsweise entlang der Sollfahrspur (11), des Vorgewendepunkts (13) vorgesehen ist.

11. Steuerungsvorrichtung nach einem der Ansprüche 1 bis 10, **dadurch gekennzeichnet, dass** die Prozessorvorrichtung (1) dazu eingerichtet ist, die Steuerungssequenz auszulösen, wenn die Steuerungssequenz an der aktuellen Arbeitsmaschinenposition auslösbar ist.

12. Landwirtschaftliche Arbeitsmaschine mit einer Steuerungsvorrichtung (S) nach einem der Ansprüche 1 bis 11.

## Claims

1. A control apparatus for an agricultural working machine, wherein a control sequence is associated with the agricultural working machine, wherein a processor device (1) is provided for determining the triggerability of the control sequence based on a working machine position and area information relating to a processing field,
**characterised in that**
determining the triggerability is also based on a direction of travel of the working machine and wherein the processor device (1) is adapted, based on the area information and the control sequence, to determine an in particular substantially rectangular admissibility area (6a-d), preferably with a triggering point (7a, 7b).

2. A control apparatus according to claim 1 **characterised in that** determining triggerability is also based on the control sequence.

3. A control apparatus according to claim 2 **characterised in that** the control apparatus (S) includes a visualisation device (8) for graphic output of the admissibility area (6a-d) and/or the triggering point (7a, 7b).

4. A control apparatus according to claim 3 **characterised in that** the visualisation device (8) is adapted to graphically output differently the admissibility area (6a-d) based on the working machine position and the travel direction.

5. A control apparatus according to claim 4 **characterised in that** the visualisation device (8) is adapted to output a first representation of the adm issibility area (6a-d) when the control sequence can be triggered at the current working machine position and a second representation of the admissibility area (6a-d) when the control sequence cannot be triggered at the current working machine position.

6. A control apparatus according to claim 5 **characterised in that** the processor device (1) is adapted to determine a movement projection (9a-k) and the triggerability of the control sequence along the movement projection (9a-k) based on the working machine position and the travel direction, wherein the visualisation device (8) is adapted to output a third representation of the admissibility area (6a-d) when the control sequence cannot be triggered at the current working machine position and the processor device (1) has determined that the control sequence can be triggered at a working machine position on the movement projection (9a-k) with a travel direction in accordance with the movement projection (9a-k).

7. A control apparatus according to one of claims s 1 to 6 **characterised in that** the control sequence includes a succession of control processes, preferably that the processor device (1) is adapted to associate a starting point (4a-l) with each control process, in particular wherein the visualisation device (8) is adapted to display the respective starting point (4a-l).

8. A control apparatus according to claim 7 **characterised in that** the processor device (1) is adapted to determine the triggerability of each control process of the control sequence based on the working machine position, the travel direction and the respective starting point (4a-l), preferably also based on the movement projection (9a-k), in particular wherein the visualisation device (8) is adapted to display the triggerability of each control process of the control sequence.

9. A control apparatus according to one of claims 1 to 8 **characterised in that** the area information includes information about a crop stand boundary (12), and preferably that determining triggerability is also based on a headland point (13), wherein the information about a stand boundary (12) includes the headland point (13) and a target travel path (11) or the processor device (1) is adapted to determine the headland point (13) from the target travel path (11) and the area information.

10. A control apparatus according to claim 9 **characterised in that** there is provided an input device (14) for a variable displacement, preferably along the target travel path (11), of the headland point (13).

11. A control apparatus according to one of claims 1 to 10 **characterised in that** the processor device (1) is adapted to trigger the control sequence when the control sequence can be triggered at the current working machine position.

12. An agricultural working machine having a control apparatus (S) according to one of claims 1 to 11.

## Revendications

1. Dispositif de commande pour une machine de travail agricole, à la machine de travail agricole étant associée une séquence de commande, un dispositif processeur (1) étant prévu pour déterminer la possibilité de déclenchement de la séquence de commande sur la base d'une position de machine de travail et d'une information de terrain sur le champ traité, **caractérisé en ce que** la détermination de la possibilité de déclenchement est également basée sur un sens de marche de la machine de travail, le dispositif processeur (1) étant agencé pour déterminer, sur la base de l'information de terrain et de la séquence de commande, une zone d'admissibilité (6a-d), en particulier sensiblement rectangulaire, de préférence avec un point de déclenchement (7a, 7b).

2. Dispositif de commande selon la revendication 1, **caractérisé en ce que** la détermination de la possibilité de déclenchement est également basée sur la séquence de commande.

3. Dispositif de commande selon la revendication 2, **caractérisé en ce que** le dispositif de commande (S) comprend un dispositif de visualisation (8) pour l'édition graphique de la zone d'admissibilité (6a-d) et/ou du point de déclenchement (7a, 7b).

4. Dispositif de commande selon la revendication 3, **caractérisé en ce que** le dispositif de visualisation (8) est agencé pour éditer graphiquement la zone d'admissibilité (6a-d) de manière différente sur la base de la position de machine de travail et du sens de marche.

5. Dispositif de commande selon la revendication 4, **caractérisé en ce que** le dispositif de visualisation (8) est agencé pour éditer une première représentation de la zone d'admissibilité (6a-d) lorsque la séquence de commande est déclenchable dans la position instantanée de la machine de travail et pour éditer une seconde représentation de la zone d'admissibilité (6a-d) lorsque la séquence de commande n'est pas déclenchable dans la position instantanée de la machine de travail.

6. Dispositif de commande selon la revendication 5, **caractérisé en ce que** le dispositif processeur (1) est agencé pour déterminer, sur la base de la position de machine de travail et du sens de marche, une projection de déplacement (9a-k) ainsi que la possibilité de déclenchement de la séquence de commande suivant la projection de déplacement (9a-k), le dispositif de visualisation (8) étant agencé pour éditer une troisième représentation de la zone d'admissibilité (6a-d) lorsque la séquence de commande n'est pas déclenchable dans la position instantanée de la machine de travail et que le dispositif processeur (1) a déterminé que la séquence de commande est déclenchable dans une position de machine de travail sur la projection de déplacement (9a-k) avec un sens de marche conforme à la projection de déplacement (9a-k).

7. Dispositif de commande selon une des revendications 1 à 6, **caractérisé en ce que** la séquence de commande comprend une succession d'opérations de commande, de préférence **en ce que** le dispositif processeur (1) est agencé pour attribuer à chaque opération de commande un point de départ (4a-l), en particulier le dispositif de visualisation (8) étant agencé pour indiquer le point de départ respectif (4a-l).

8. Dispositif de commande selon la revendication 7, **caractérisé en ce que** le dispositif processeur (1) est agencé pour déterminer la possibilité de déclenchement de chaque opération de commande de la séquence de commande sur la base de la position de machine de travail, du sens de marche et du point de départ respectif (4a-l), de préférence aussi sur la base de la projection de déplacement (9a-k), en particulier le dispositif de visualisation (8) étant agencé pour indiquer la possibilité de déclenchement de chaque opération de commande de la séquence de commande.

9. Dispositif de commande selon une des revendications 1 à 8, **caractérisé en ce que** l'information de terrain comprend une information sur une limite de culture (12), de préférence **en ce que** la détermination de la possibilité de déclenchement est également basée sur un point de demi-tour (13), l'information sur une limite de culture (12) comprenant le point de demi-tour (13) et une trace de passage de consigne (11), ou le dispositif processeur (1) étant agencé pour déterminer le point de demi-tour (13) à partir de la trace de passage de consigne (11) et de l'information de terrain.

10. Dispositif de commande selon la revendication 9, **caractérisé en ce qu'**un dispositif d'entrée (14) est prévu pour un décalage variable, de préférence suivant la trace de passage de consigne (11), du point de demi-tour (13).

11. Dispositif de commande selon une des revendications 1 à 10, **caractérisé en ce que** le dispositif processeur (1) est agencé pour déclencher la séquence de commande lorsque la séquence de commande est déclenchable dans la position instantanée de la machine de travail.

12. Machine de travail agricole comprenant un dispositif de commande (S) selon une des revendications 1 à 11.
